## Europäisches Patentamt

## European Patent Office

## Office européen des brevets

(19)

(11) Veröffentlichungsnummer: **0 235 708**
**A2**

(12) # EUROPÄISCHE PATENTANMELDUNG

(21) Anmeldenummer: **87102467.5**

(51) Int. Cl.⁴: **G 01 C 9/28**

(22) Anmeldetag: **21.02.87**

(30) Priorität: **28.02.86 AT 517/86**

(43) Veröffentlichungstag der Anmeldung: **09.09.87**
Patentblatt 87/37

(84) Benannte Vertragsstaaten: **DE FR GB**

(71) Anmelder: **Firma Ing. Guido Scheyer, Unteres Tobel 25,
A-6840 Götzis (AT)**

(72) Erfinder: **Scheyer, Dietmar, Konstanzerstrasse 34,
A-6840 Götzis (AT)**

(74) Vertreter: **Hefel, Herbert, Dipl.-Ing., Egelseestrasse 65a,
A-6800 Feldkirch-Tosters (AT)**

(54) **Wasserwaage.**

(57) Bei einer Wasserwaage (1) sind in der Regel Libellenkörper (2) zum Kontrollieren horizontaler Flächen und Libellenkörper (3) zum Kontrollieren vertikaler Flächen vorgesehen. Bei dieser Wasserwaage (1) ist im Waagenkörper (6) ein weiterer Libellenkörper (4) vorgesehen, der gegenüber dem Waagenkörper (6) verdreht werden kann, um die Winkelstellung der Libelle im Libellenkörper (4) gegenüber der Anlagefläche (5) des Waagenkörpers (6) zu verändern. Zur Winkeleinstellung sind am Libellenkörper (4) ein Markierungsfortsatz (16) und am Steg (7) des Waagenkörpers (6) eine Winkelskala (17) vorgesehen. Am verdrehbaren Libellenkörper (4) ist ein umlaufender Flansch (8) vorgesehen, der unter einem am Waagenkörper (6) montierten Klemmbacken (9) eingreift. Durch einen verdrehbaren Spannteil (21) mit einem Betätigungsknopf (22) und radial abstehenden Spannfingern (23) kann der Klemmbacken (9) gegen den Flansch (8) gepreßt werden, so daß der Libellenkörper (4) in der eingestellten Winkellage fixiert ist.

EP 0 235 708 A2

ACTORUM AG

Die Erfindung betrifft eine Wasserwaage mit wenigstens einem in der Winkeleinstellung gegenüber der Anlagefläche veränderbaren Libellenkörper, wobei der Libellenkörper am Waagenkörper oder an einem mit dem Waagenkörper fest verbundenen Montageteil verdrehbar gehalten und in der gewünschten Winkeleinstellung gegenüber dem Waagenkörper oder dem Montageteil feststellbar ist.

Es sind für verschiedene Neigungsmessungen Wasserwaagen bekannt, bei welchen der Libellenkörper gegenüber dem Waagenkörper verstellbar ist, um zum Beispiel eine 30° oder 45°-Neigung mit der Wasserwaage überprüfen zu können. Zu diesem Zweck sind die Libellenkörper im Waagenkörper verdrehbar gehalten und können entsprechend einer auf dem Waagenkörper abgedruckten oder aufgesetzten Winkelskala eingestellt werden. Um einen ordnungsgemäßen Einsatz der Wasserwaage zu gewährleisten, muß der Libellenkörper in der gewünschten Winkeleinstellung gegenüber dem Waagenkörper fixiert werden können.

Es ist bereits eine Ausführung bekannt, bei welcher ein in einem Montageteil eingesetzter Libellenkörper relativ schwer verdrehbar gehalten ist, um dadurch zu gewährleisten, daß er sich nicht selbsttätig in der Winkeleinstellung ändert. Auf dem relativ rauhen Baubetrieb ist jedoch eine solche Ausführung nicht geeignet, da bereits durch ein Anstoßen oder durch ein Berühren mit den Händen eine Verstellung erfolgen kann.

Es ist auch eine Ausführung bekannt, bei welcher der Libellenkörper aus zwei Teilen gebildet ist, welche miteinander verschraubt sind. Bei Lösen der Verschraubung kann ein Verdrehen des Libellenkörpers gegenüber dem Waagenkörper erfolgen. Anschließend muß aber zum Feststellen stets ein Schraubwerkzeug verwendet werden, um die Fixierung zu bewerkstelligen.

Die vorliegende Erfindung hat sich zur Aufgabe gestellt, eine Wasserwaage der eingangs genannten Art zu schaffen, bei welcher eine einfache Einstellung der gewünschten Winkellage des Libellenkörpers gegenüber dem Waagenkörper möglich ist und bei welcher eine einfache Fixierung ohne Zuhilfenahme von Spezialwerkzeugen ermöglicht wird.

0235708

Erfindungsgemäß wird dazu vorgeschlagen, daß am verdrehbaren Libellenkörper wenigstens ein umlaufender Flansch ausgebildet ist, der unter einen auf die Flanschfläche mittels handbetätigter Spannteile anpreßbaren Klemmbacken eingreift.

Durch die besondere Konstruktion des Libellenkörpers ist in einfacher Weise eine Möglichkeit geschaffen worden, von außen her bzw. von der Seite her auf den Libellenkörper eine Fixierungsmöglichkeit zu schaffen. Durch die Ausbildung des umlaufenden Flansches kann der Libellenkörper selbst sehr einfach konstruiert werden. Die Fixierung des Libellenkörpers in der eingestellten Winkellage erfolgt dann durch auf den Flansch anpreßbare Klemmbacken, wobei solche Klemmbacken bei der vorliegenden Erfindung durch handbetätigte Spannteile an die Flanschfläche anpreßbar sind.

Es ergibt sich dadurch nicht nur eine sehr einfache Konstruktion, sondern auch eine einfache Handhabung, da durch einen Handgriff die von den Klemmbacken ausgelöste Spannung gelöst werden kann, worauf dann der Libellenkörper schnell und einfach verdreht werden kann. Durch einen einzigen Handgriff kann dann über entsprechende Spannteile der Klemmbacken wiederum an die Flanschfläche des umlaufenden Flansches angepreßt werden, so daß die eingestellte Winkellage wiederum sicher fixiert ist.

Gerade für den Einsatz auf Baustellen oder bei einem Montagebetrieb ist eine schnelle und einfache Verstellmöglichkeit ohne Zuhilfenahme von Spezialwerkzeugen von besonderem Vorteil.

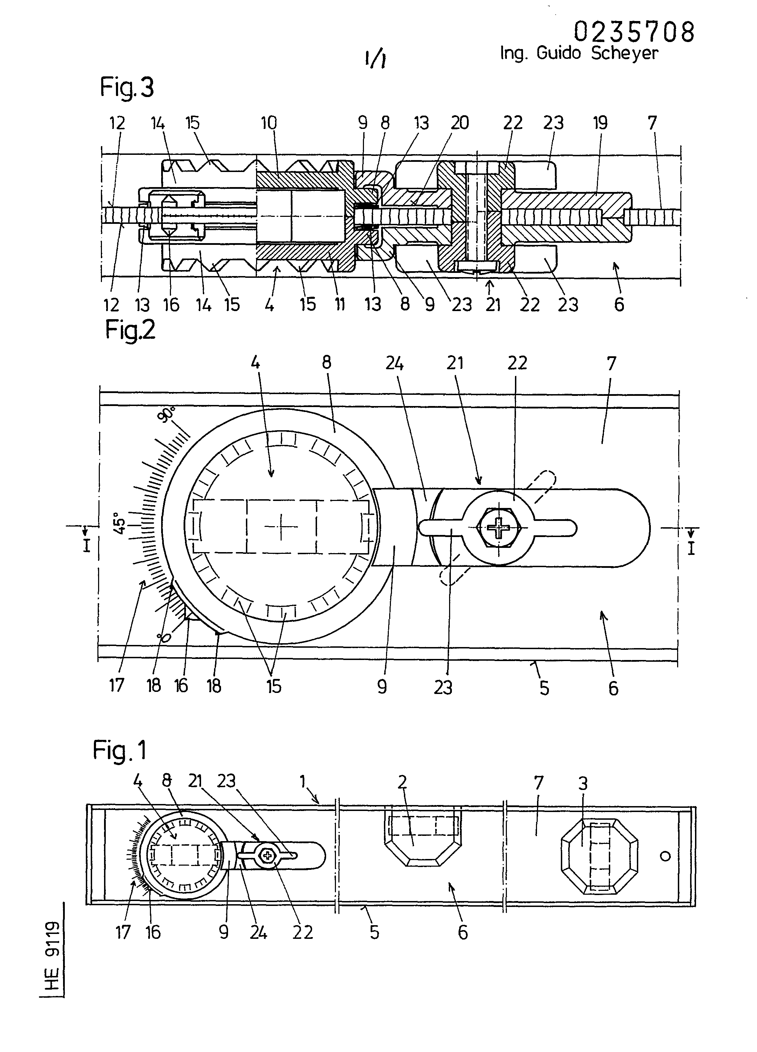

Weitere erfindungsgemäße Merkmale und besondere Vorteile werden in der nachstehenden Beschreibung anhand der Zeichnung noch näher erläutert. Es zeigen: Fig. 1 eine Vorderansicht einer Wasserwaage; Fig. 2 ein Detail dieser Wasserwaage vergrößert dargestellt; Fig. 3 einen Schnitt nach der Linie I - I in Fig. 2. In Fig. 1 ist eine Wasserwaage 1 dargestellt, welche drei Libellenkörper aufweist. Ein erster Libellenkörper 2 dient für die Horizontalmessung und ein zweiter Libellenkörper 3 für die Vertikalmessung, wie sie bei üblichen Wasserwaagen gegeben ist. Der dritte

0235708
- 3 -

hier gezeigte Libellenkörper 4 kann in verschiedene Winkeleinstellungen gegenüber der Anlagefläche 5 des Waagenkörpers 6 gebracht werden, so daß auch neben der Horizontal- und der Vertikalmessung eine Überprüfung bei anderen Winkellagen möglich ist. Bei der gezeigten Ausführung einer Wasserwaage ist der Waagenkörper als I-Profil ausgeführt, wobei die Libellenkörper 2 bis 4 in dem Steg 7 des Waagenkörpers 6 eingesetzt sind. Die erfindungsgemäßen Maßnahmen lassen sich selbstverständlich auch für Wasserwaagen anwenden, welche aus einem Hohlprofil oder einem Vollprofil gefertigt sind, wobei dann lediglich geringfügige konstruktive Abänderungen durchgeführt werden könnten.

Bei der vorliegenden Erfindung liegt nun das wesentliche Merkmal darin, daß an dem verdrehbaren Libellenkörper 4 wenigstens ein umlaufender Flansch 8 ausgebildet ist, der unter einen anpreßbaren Klemmbacken 9 eingreift.

Der Libellenkörper 4 ist aus zwei mit umlaufenden Flanschen 8 versehenen Bauteilen gebildet, wobei die beiden Bauteile in eine Bohrung am Waagenkörper 6 bzw. im Steg 7 dieses Waagenkörpers 6 eingesetzt sind. Diese beiden Bauteile 10 und 11 werden durch Verkleben oder durch Verschweißen fest miteinander verbunden. Der Libellenkörper 4 wird gerade durch die Ausbildung der Flansche 8 dadurch unverlierbar im Waagenkörper 6 gehalten. Der Libellenkörper 4 soll sich auch dann, wenn die Klemmbacken 9 nicht angepreßt sind, nicht zu leicht gedreht werden können, damit ein einfaches und sicheres Einstellen auf eine bestimmte Winkellage möglich ist. Zu diesem Zweck sind zwischen den Flanschen 8 am Libellenkörper 4 und der Oberfläche 12 des Waagenkörpers 6 bzw. des Steges 7 tellerfederartige Ringteile 13 eingesetzt.

Zur leichteren Handhabung des Libellenkörpers 4 und somit zu einem einfachen Einstellen der Winkellage weist jeweils der über den Flansch 8 und annähernd rechtwinkelig von diesem nach außen abragende ringförmige Abschnitt 14 wellen-, noppen-, zinnen- oder zackenförmige Vorsprünge 15 auf.

Am Außenumfang des Flansches 8 ist ein nasenartiger Markierungsfortsatz 16 vorgesehen, der mit einer auf dem Waagenkörper 6 aufgebrachten Winkelskala 17 zusammenwirkt. Da solche Winkelskalen infolge des beengten Raumes lediglich eine Abstufung von 2° aufweisen können, erweist sich die erfindungsgemäße Zusatzmaßnahme als besonders vorteilhaft, wenn nämlich beidseitig winkelmäßig versetzt zum nasenartigen Markierungsfortsatz 16 weitere Markierungsnasen 18 vorgesehen sind, welchen eine Noniusfunktion zukommt. Wenn also eine Zwischeneinstellung erforderlich ist auf eine ungerade Gradeinstellung, dann kann der Markierungsfortsatz 16 annähernd in die Mitte zwischen den beiden Strichen eingesetzt werden, wobei zur Überprüfung der genauen Lage die beiden Markierungsnasen 18 mit entsprechenden Strichen der Winkelskala 17 übereinstimmen müssen.

Die Klemmbacken 9 sind beim gezeigten Ausführungsbeispiel als am Waagenkörper 6 bzw. dem Steg 7 desselben befestigte Laschen 19 ausgeführt, deren freie Enden abgesetzt sind und mit diesem abgesetzten Teil die Flansch 8 des Libellenkörpers 4 übergreifen. Die Klemmbacken 9 sind zumindest in dem unmittelbar an die Flansche 8 anschließenden Bereich mit Abstand von der Oberfläche 12 des Steges 7 verlaufend angeordnet, so daß also zwischen der Unterseite 20 der Klemmbacken 8 und der Oberfläche 12 des Steges 7 ein entsprechender Spalt freibleibt. Dadurch ist eine ordnungsgemäße Möglichkeit gegeben, durch einen Druck auf die Klemmbacken 9 eine Anpressung an die Flansche 8 zu bewirken.

Im Anlagebereich der Klemmbacken 9 an der zugeordneten Flanschfläche der Flansche 8 können diese Klemmbacken 9 nochmals abgesetzt sein, so daß eine relativ schmale Auflagefläche und somit eine sichere Preßfläche gegeben ist.

Zum Verspannen der Klemmbacken 9 ist ein verdreh- und/oder verschiebbarer Spannteil vorgesehen. Es wäre also auch denkbar, einen verschiebbaren Spannteil vorzusehen, der dann beispielsweise gegen eine schräge Auflauffläche in Richtung zum Libellenkörper 4 hin verschoben würde. Beim gezeigten Beispiel ist ein verdrehbarer Spannteil 21 vorgesehen. Dieser Spannteil ist hier als Betätigungsknopf 22 mit wenigstens einem Spannfinger 23 ausgeführt. Am freien Endbereich des Klemmbackens 9 ist eine Auflauffläche 24 ausgebildet, welche mit dem verdrehbaren Spannteil 21 und hier im besonderen mit den Spannfingern 23 zusammenwirkt. In der gelösten Stellung liegen die Spannfinger 23 (strichlierte Darstellung in Fig. 2) außerhalb des Eingriffsbereiches an der Auflauffläche 24. Die Klemmbacken 9 liegen daher ohne Druck auf den umlaufenden Flanschen 8 auf. Sobald jedoch der Betätigungsknopf 22 verdreht wird, gelangt einer der Spannfinger 23 auf die schräge Auflauffläche 24, so daß dieses freie Ende des Klemmbackens 9 nach unten, d. h. in Richtung zur Oberfläche 12 des Steges 7 gepreßt wird und somit die Anpreßkraft auf den Flansch 8 des Libellenkörpers 4 hervorruft.

Wie schon ausgeführt, handelt es sich bei der gezeigten Ausführungsform einer Wasserwaage um eine Doppelanordnung der Flansche 8 und der Klemmbacken 9. Es wäre selbstverständlich auch eine Einfachanordnung denkbar, doch ergibt sich durch diese Doppelanordnung eine noch bessere Klemmkraft. Bei dieser Doppelanordnung durchdringt der drehbare Spannteil 21 den Waagenkörper 6 bzw. den Steg 7 desselben und wenigstens zwei Klemmbacken 9. An beiden freien Enden ist dann ein Betätigungsknopf 22 vorgesehen, wobei diese beiden Betätigungsknöpfe 22 verdrehfest miteinander verbunden sind. Beide BEtätigungsknöpfe 22 weisen radial abstehende Spannfinger 23 auf. Es muß dadurch nicht auf beiden Seiten ein Festspannen erfolgen, sondern eine Betätigung des Spannteiles 21 auf der einen Seite bewirkt zugleich ein Verspannen auf der Rückseite des Waagenkörpers.

Anstelle der beiden diametral einander gegenüberliegenden Spannfinger 23 könnte auch lediglich ein einziger solcher Spannfinger 23 vorgesehen werden, wobei dieser auch jede andere Ausführungsform aufweisen könnte. Durch die Doppelanordnung ist jedoch eine bessere Kraftumsetzung durch die die Verstellung vornehmende Bedienungsperson möglich, ohne daß irgendwelche Hilfsgeräte oder Werkzeuge verwendet werden müßten. Es wäre auch denkbar, den Spannteil 21 selbst mit einer schrägen Auflauffläche auszuführen, so daß also je nach dem Verdrehwinkel eines Betätigungsknopfes mehr oder weniger ein Anspannen der Klemmbacken 9 an die Flansche 8 erfolgt. Dies wäre auch bei gemeinsamen Zusammenwirken einer schrägen Auflauffläche 24 auf den Klemmbacken 9 und einer schrägen Auflauffläche an dem Spannteil 21 möglich. In diesem Zusammenhang ist es auch zweckmäßig, wenn die Auflauffläche nach beiden Seitenrändern des Klemmbackens 9 hin schräg abfällt, da dann auch die Drehrichtung der Spannteile 21 für die Herstellung der Klemmverbindung gleichgültig ist.

Wesentlich in diesem Zusammenhang ist jedoch immer, daß ein Klemmbacken 9 vorgesehen ist, der auf einen umlaufenden Flansch 8 aufdrückt, und daß dieser Klemmbacken 9 durch entsprechend verdreh- und/oder verschiebbare Teile angepreßt wird. Es kommt also nicht zu einem direkten Einwirken von Dreh- oder Schiebekörpern auf den Libellenkörper 4, da dann immer wieder die Gefahr der Verstellung beim Spannvorgang gegeben wäre.

Für die Spannteile können verschiedene konstruktive Varianten eingesetzt werden, so daß nicht nur drehbare oder verschiebbare Spannteile in der bereits erläuterten Form eingesetzt werden können, sondern auch andere Ausführungsvarianten. So wäre es denkbar, eine Exzenterrolle zum Anpressen des Klemmbackens 9 einzusetzen, welche beispielsweise um eine parallel zum Steg 7 verlaufende Achse verdrehbar wäre. Es ist auch nicht zwingend notwendig, daß der drehbare Spannteil 21 den Klemmbacken 9 mittig durchdringt, sondern diese Spannteile 21 könnten auch außerhalb der von den Klemmbacken 9 bedeckten Fläche angeordnet werden.

Die Erfindung wurde anhand eines Ausführungsbeispieles beschrieben, bei welchem der Waagenkörper als I-Profil ausgeführt ist. Es sind hier unter Umständen mir nur geringen konstruktiven Abänderungen alle Wasserwaagenkonstruktionen mit der erfindungsgemäßen Anordnung auszustatten. Bei einem als Hohlprofil ausgeführten Waagenkörper könnten beispielsweise die Klemmbacken 9 und die Flansche 8 sowie entsprechend Spannfinger 23 usw. an der Innenseite des Hohlprofils angeordnet sein, wobei der drehbare Spannteil und somit der Betätigungsknopf 22 an der Außenfläche des Waagenkörpers vorgesehen wäre.

Im Rahmen der Erfindung wäre es auch möglich, den Libellenkörper 4 nicht direkt im Steg 7 bzw. im Gehäuse des Waagenkörpers zu lagern, sondern in einem Montageteil drehbar anzuordnen, wobei dann dieser Montageteil, beispielsweise ein Kunststoffkörper, mit dem Waagenkörper fest verbunden ist. Die Klemmbacken 9 können dann entweder am Waagenkörper oder aber auch an dem feststehenden Montageteil angeordnet werden, wobei dann natürlich auch die Spannteile entsprechend zu montieren sind.

Durch die erfindungsgemäßen Maßnahmen wird eine sehr einfache Ausführung für eine Winkeleinstellmöglichkeit des Libellenkörpers bei Wasserwaagen geschaffen, durch welche auch eine einfache Montage und Einstellung sowie Fixierung gewährleistet ist.

Feldkirch, am **1987 -02- 1 8**        Für Ing. Guido Scheyer:
Der Vertreter:

PATENTANWALT
Dipl.-Ing. Herbert HEFEL

Patentanwalt **Dipl.-Ing. Herbert Hefel** 6800 Feldkirch
EUROPAISCHER PATENTVERTRETER

P a t e n t a n s p r ü c h e :

1. Wasserwaage mit wenigstens einem in der Winkeleinstellung gegenüber der Anlagefläche veränderbaren Libellenkörper, wobei der Libellenkörper am Waagenkörper oder an einem mit dem Waagenkörper fest verbundenen Montageteil verdrehbar gehalten und in der gewünschten Winkeleinstellung gegenüber dem Waagenkörper oder dem Montageteil feststellbar ist, dadurch gekennzeichnet, daß am verdrehbaren Libellenkörper (4) wenigstens ein umlaufender Flansch (8) ausgebildet ist, der unter einen auf die Flanschfläche mittels handbetätigter Spannteile (21) anpreßbaren Klemmbacken (9) eingreift.

2. Wasserwaage nach Anspruch 1, dadurch gekennzeichnet, daß der Libellenkörper (4) aus zwei mit umlaufenden Flanschen (8) versehenen Bauteilen (10, 11) und der Röhrenlibelle gebildet ist, wobei die beiden Bauteile (10, 11) in eine Bohrung am Waagenkörper eingesetzt und durch Verschweißen oder Verkleben fest miteinander verbunden sind.

3. Wasserwaage nach den Ansprüchen 1 und 2, dadurch gekennzeichnet, daß zwischen den Flanschen (8) am Libellenkörper (4) und der Oberfläche (12) des Waagenkörpers tellerfederartige Ringteile (13) eingesetzt sind.

4. Wasserwaage nach den Ansprüchen 1 bis 3, dadurch gekennzeichnet, daß der über den Flansch (8) und annähernd rechtwinklig von diesem nach außen abragende ringförmige Abschnitt (14) des Libellenkörpers (4) wellen-, noppen-, zinnen- oder zackenförmige Vorsprünge (15) aufweist.

5. Wasserwaage nach einem der Ansprüche 1 bis 4, dadurch gekennzeichnet, daß am Außenumfang des (der) Flansche(s) ein nasenartiger Markierungsfortsatz (16) vorgesehen ist, der mit einer auf dem Waagenkörper aufgebrachten Winkelskala (17) zusammenwirkt.

6. Wasserwaage nach Anspruch 5, dadurch gekennzeichnet, daß beidseitig winkelmäßig versetzt zum nasenartigen Markierungsfortsatz (16) weitere Markierungsnasen (18) mit einer Noniusfunktion vorgesehen sind.

7. Wasserwaage nach Anspruch 1, dadurch gekennzeichnet, daß die Klemmbacken (9) als am Waagenkörper (6) bzw. einem Steg (7) desselben befestigte Laschen (19) ausgeführt sind, deren freie Enden abgesetzt sind und mit diesem abgesetzten Teil die Flansche (8) des Libellenkörpers (4) übergreifen.

8. Wasserwaage nach den Ansprüchen 1 und 7, dadurch gekennzeichnet, daß die Klemmbacken (9) zumindest in dem unmittelbar an die Flansch (8) anschließenden Bereich mit Abstand von der Oberfläche (12) des Waagenkörpers bzw. eines Steges (7) desselben verlaufen.

9. Wasserwaage nach den Ansprüchen 1, 7 und 8, dadurch gekennzeichnet, daß dem freien, den Flansch (8) übergreifenden Endbereich des Klemmbackens (9) ein verdreh- und/oder verschiebbarer Spannteil (21) zugeordnet ist.

10. Wasserwaage nach den Ansprüchen 1 und 7 bis 9, dadurch gekennzeichnet, daß am freien Endbereich des Klemmbackens (9) eine Auflauffläche (24) ausgebildet ist, welche mit einem verdreh- und/oder verschiebbaren Spannteil (21) zusammenwirkt.

11. Wasserwaage nach den Ansprüchen 1 und 7 bis 10, dadurch gekennzeichnet, daß der Spannteil (21) als mit zur Drehachse des Libellenkörpers paralleler Achse verdrehbarer Handbetätigungsknopf (22) ausgeführt ist, der wenigstens einen radial auskragenden und mit der Auflauffläche (24) zusammenwirkenden Spannfinger (23) aufweist.

12. Wasserwaage nach Anspruch 11, dadurch gekennzeichnet, daß der drehbare Spannteil (21) den Waagenkörper (6) bzw. einen Steg (7) des Waagenkörpers (6) und wenigstens zwei Klemmbacken (9) durchdringt und an beiden freien Enden verdrehfest miteinander verbundene Betätigungsknöpfe (22) mit radial abstehenden Spannfingern (23) aufweist.

13. Wasserwaage nach den Ansprüchen 11 und 12, dadurch gekennzeichnet, daß jeder Betätigungsknopf (22) jeweils zwei diametral abstehende Spannfinger (23) aufweist.

0235708

14. Wasserwaage nach Anspruch 10, dadurch gekennzeichnet, daß die Auflauffläche (24) an den Klemmbacken (9) nach beiden Seitenrändern der Klemmbacken (9) hin schräg abfällt.

15. Wasserwaage nach Anspruch 1 und einem der vorhergehenden Ansprüche, dadurch gekennzeichnet, daß die Klemmbacken (9) und die Flansche (8) an der Innenseite eines als Hohlprofil ausgeführten Waagenkörpers angeordnet sind, wobei der drehbare Spannteil an der Außenoberfläche des Waagenkörpers einen Betätigungsknopf aufweist.

Feldkirch, am 1987 -02- 1 8          Für Ing. Guido Scheyer:
                                     Der Vertreter:

                                     PATENTANWALT
                                 — Dipl.-Ing. Herbert HEFEL

860226

0235708

Ing. Guido Scheyer

1/1

**Fig.3**

**Fig.2**

**Fig.1**

HE 9119